# EUROPÄISCHE PATENTSCHRIFT

(11) **EP 4 257 915 B1**
(45) Veröffentlichungstag und Bekanntmachung des Hinweises auf die Patenterteilung: **06.11.2024**
(21) Anmeldenummer: 23165311.4
(22) Anmeldetag: 30.03.2023
(51) Int. Cl.: F42B 5/16, F42B 3/04, C06B 45/12, C06D 5/06

(54) **GEPRESSTES TREIBSTOFFELEMENT, VERFAHREN ZU DESSEN HERSTELLUNG UND GASGENERATOR MIT TREIBSTOFFELEMENT**
PRESSED FUEL ELEMENT, METHOD FOR THE PRODUCTION THEREOF, AND GAS GENERATOR HAVING FUEL ELEMENT
ÉLÉMENT COMBUSTIBLE COMPRIMÉ, SON PROCÉDÉ DE FABRICATION ET GÉNÉRATEUR DE GAZ COMPRENANT UN ÉLÉMENT COMBUSTIBLE

(30) Priorität: 06.04.2022 DE 102022108291
(43) Veröffentlichungstag der Anmeldung: 11.10.2023
(73) Patentinhaber: ZF Airbag Germany GmbH, 84544 Aschau a. Inn (DE)
(72) Erfinder: König, Michael, 84478 Waldkraiburg (DE); Wienhold, Sebastian, 85646 Anzing (DE)
(74) Vertreter: ZF Patentabteilung - DIPS

(56) Entgegenhaltungen:
- DE-B- 1 111 340
- DE-U1- 202011 104 042
- JP-A- 2001 278 690
- US-A- 4 014 963

## Beschreibung

Die Erfindung betrifft ein Treibstoffelement für einen Gasgenerator zur Verwendung in einer Sicherheitseinrichtung sowie ein Verfahren zur Herstellung des Treibstoffelements.

Treibstoffelemente für Gasgeneratoren sind aus dem Stand der Technik bekannt. Um Fahrzeuginsassen bei einem Unfall zu schützen, sind in einem Fahrzeug verschiedene Sicherheitseinrichtungen vorgesehen. Eine solche Sicherheitseinrichtung kann beispielsweise ein mit einem Gasgenerator ausgerüstetes Gassackmodul darstellen. Im Falle einer bevorstehenden Kollision des Fahrzeugs mit einem anderen Objekt setzt der Gasgenerator ein Druckgas frei, das einen Gassack aus dem Gassackmodul entfaltet, wodurch die Fahrzeuginsassen zurückgehalten werden.

Gasgeneratoren dienen der Erzeugung eines Druckgases und sind in verschiedenen Ausführungsformen bekannt. Grundsätzlich verwenden Gasgeneratoren ein Treibstoffelement, das innerhalb des Gasgenerators angeordnet ist und nach Aktivierung durch einen elektrischen Anzünder eine exotherme Reaktion eingeht, wodurch das Druckgas im Gassack freisetzt wird.

Treibstoffelemente liegen üblicherweise in Form von Tabletten vor, die auf verschiedene Weisen hergestellt werden können. In der Regel weisen diese Tabletten einen mehrkomponentigen Aufbau auf. Beispielsweise sind Treibstoffelemente in Form von Tabletten bekannt, die aus zwei oder mehr pyrotechnischen Komponenten aufgebaut sind. Die Integration verschiedener pyrotechnischer Komponenten in einer Tablette dient dazu, eine Abbrandcharakteristik des Treibstoffelements gezielt zu beeinflussen. Mit einer Optimierung der Abbrandcharakteristik kann unter anderem ein verbessertes Aufblasverhalten des Gassacks erreicht werden.

Unter dem Begriff Abbrandcharakteristik wird im Folgendem eine Reihe von Eigenschaften verstanden, die eine Treibstofftablette für einen Gasgenerator im Funktionsfall, also bei einem Abbrand, aufweist. Als Abbrandcharakteristiken werden beispielsweise die Abbrandrate, Abbrandgeschwindigkeit, Abbrandgeschwindigkeit an der Oberfläche, Gasausbeute, Selbstentzündungstemperatur, Entzündbarkeit, Überzündbarkeit, Druckexponenten und das generelle Abbrandverhalten (degressiv oder progressiv) verstanden.

Der Stand der Technik offenbart verschiedene Möglichkeiten auf die Abbrandcharakteristik des Treibstoffelements Einfluss zu nehmen.

Aus der DE 097 690A ist ein Verfahren zur Herstellung eines Pulvers bekannt, dessen Bestandteile so ausgewählt sind, dass die Verbrennung des Pulvers von außen nach innen mit wachsender Geschwindigkeit erfolgt. Dazu ist das Pulver aus mehreren zusammengewalzten Blättern zusammengesetzt, wobei die jeweiligen Blätter voneinander verschiedene Abbrandcharakteristiken aufweisen.

Die DE 39 33 554 C1 beschreibt eine Manteltablette für einen Airbag-Gasgenerator, wobei die vorgeschlagene Tablette einen Kern aufweist, der mit einer inerten Umhüllung versehen ist, ausgewählt aus einer Gruppe bestehend aus Boraten, Bor-Oxiden, Aluminate-Aluminium-Oxiden, Silikaten und Siliziumdioxid.

Eine weitere Manteltablette für einen Gasgenerator ist in der DE 10 2012 024 799 A1 offenbart. Vorgeschlagen wird ein Treibstoffelement, das als Tablette ausgebildet ist, die ein aus einem pyrotechnischen Material bestehenden Kern aufweist, wobei der Kern wenigstens teilweise mit einer Hülle aus einem den Abbrand des Kerns verzögernden Material umgeben ist.

Die JP 2001 - 278 690 A offenbart Treibstoffelemente mit diversen Tablettenformen für den Einsatz in Gasgeneratoren, wobei die Tabletten aus einem ersten und einem zweiten pyrotechnischen Material bestehen, die miteinander laminiert sind. Das erste pyrotechnische Material unterscheidet sich vom zweiten pyrotechnischen Material in der Abbrandgeschwindigkeit. Vorrangig werden in dieser Druckschrift Mehrschicht-Tabletten offenbart, die einen mehrlagigen Aufbau bestehend aus dem ersten und dem zweiten pyrotechnischen Material aufweisen.

Um eine optimale Abbrandcharakteristik zu gewährleisten, ist man bestrebt, die Eigenschaften der Treibstoffelemente je nach Bedarf anzupassen.

Es ist daher Aufgabe der Erfindung, ein Treibstoffelement bereitzustellen, das einfach herstellbar ist und eine definierte Abbrandcharakteristik aufweist.

Die Aufgabe wird erfindungsgemäß gelöst durch ein Treibstoffelement in Form einer Manteltablette nach Anspruch 1.

Vorteilhafte Ausführungsformen des erfindungsgemäßen Treibstoffelements sind in den Unteransprüchen angegeben, deren Merkmale wahlweise miteinander kombiniert werden können.

Erfindungsgemäß wird die Aufgabe gelöst durch ein Treibstoffelement für einen Gasgenerator zur Verwendung in einer Sicherheitseinrichtung in Form einer Manteltablette. Die Manteltablette umfasst einen Kern aus einem ersten pyrotechnischen Material und eine den Kern umhüllende Mantelschicht aus einem zweiten pyrotechnischen Material. Das erste pyrotechnische Material unterscheidet sich von dem zweiten pyrotechnischen Material. Der Kern weist einen in radialer Richtung vorstehenden Randabschnitt auf, der sich durch die Mantelschicht bis zu einer Außenkontur der Manteltablette erstreckt. Der Randabschnitt ist entlang einer Umfangsrichtung der Manteltablette ausgebildet und weist in Axialrichtung der Manteltablette eine geringere Ausdehnung auf als der Kern.

Die Erfindung beruht auf dem Grundgedanken, ein Treibstoffelement in Form einer Manteltablette bereitzustellen, wobei der Kern und die Mantelschicht jeweils aus einem unterschiedlichen pyrotechnischen Material bestehen. Dabei ist in der Mantelschicht eine Öffnung in Form eines Spalts vorgesehen ist, die den Kern über den Randabschnitt mit der Außenkontur der Manteltablette verbindet. Auf diese Weise kann lediglich ein Teil des Kerns zur Umgebung hin exponiert werden, ohne den kompletten Kern zugänglich zu machen. Dies wird insbesondere dadurch erreicht, dass der Randabschnitt in axialer Richtung der Manteltablette eine geringere Ausdehnung als der Kern aufweist. Das Vorhandensein eines Randabschnitts gewährleistet daher, dass der Abbrand des Kerns zwar parallel mit dem Abbrand der Mantelschicht stattfindet, aber dennoch durch die geometrische Gestaltung der Tablette verzögert wird, wodurch ein unerwünschter degressiver Abbrand der Tablette verhindert werden kann.

Zudem kann die Anzündbarkeit der erfindungsgemäßen Manteltablette gezielt eingestellt werden. Dies kann über die Wahl der axialen Ausdehnung des Spalts geschehen, wodurch die Zugänglichkeit des Kerns in Form des Randabschnitts verändert wird. Bei der Wahl eines größeren Spalts kann mehr Randabschnitt und somit ein größerer Teil des Kerns der Anzündung zugänglich gemacht werden, während bei einer geringen axialen Ausdehnung des Spalts ein gegenteiliger Effekt eintritt und Anzündbarkeit des Kerns reduziert wird. Diese vorteilhafte Steuerung der Eigenschaften ist nicht auf das oben genannte Beispiel der Anzündbarkeit beschränkt, sondern gilt allgemein auch für weitere Abbrandcharakteristiken wie die Degressivität des Abbrands. Die hier vorgeschlagene Manteltablette kann somit als eine Hybridform zwischen den bekannten Manteltabletten und Mehrschicht-Tabletten verstanden werden.

Bei geringerer Selbstentzündungstemperatur des ersten pyrotechnischen Materials ist auch eine verbesserte Frühzündfunktion durch den exponierten Steg möglich.

Folglich kann durch die geometrische Gestaltung der vorgeschlagenen Manteltablette eine verbesserte Kontrolle über die Abbrandcharakteristiken erreicht werden.

Prinzipiell ist die Form der erfindungsgemäßen Manteltablette nicht eingeschränkt und es können alle im Stand der Technik bekannten Formen verwendet werden, solange die oben genannten Bedingungen erfüllt sind.

Vorteilhafterweise weist die Manteltablette eine zylindrische Form auf. Eine solche zylindrische Tablette kann eine Tablettenoberseite und eine Tablettenunterseite aufweisen. Zwischen der Tablettenoberseite und der Tablettenunterseite kann ein Stegabschnitt angeordnet sein, der als bandförmiger Begrenzungsring um die Tablette verläuft und den Kern in seiner radialen Ausdehnung begrenzt. Der Stegabschnitt wird bei einer Kompression durch eine Matrizenwand in seiner Form festgelegt. Die Höhe des Stegabschnitts kann beliebig gewählt sein und begrenzt die axiale Ausdehnung des Randabschnitts des Kerns. Es können aber auch zwei Stege vorhanden sein, die den Randabschnitt des Kerns beidseitig in seiner axialen Ausdehnung begrenzen. Die Tablettenoberseite und eine Tablettenunterseite können eine Wölbung aufweisen oder mit Facetten versehen sein. Im Falle einer gewölbten Tablette weist diese eine bikonvexe Form auf. Die Tablettenober- und Unterseite bilden insbesondere Kugelkalotten. Die Wölbung weist einen Wölbungsradius auf, welcher den Radius der Kugelkalotte darstellt.

Eine solche zylindrische Tablette weist den technischen Vorteil auf, dass diese insbesondere durch bekannte Kompressionsverfahren kostengünstig hergestellt werden kann.

Wie oben beschreiben weist die erfindungsgemäße Tablette eine Mantelschicht auf. Die Erfindung ist in Bezug auf die Mantelschicht nicht eingeschränkt. Prinzipiell kann die Form der Mantelschicht beliebig ausgeführt sein. Zudem bildet die Mantelschicht die Außenkontur der Manteltablette mit Ausnahme des Randabschnittes, der sich durch diese erstreckt. Daher kann die Mantelschicht auch den Steg sowie die Tablettenoberseite und die Tablettenunterseite umfassen.

Zusätzlich zur Form der Mantelschicht ist auch die Schichtdicke beliebig wählbar. Je nach aus Auswahl der Schichtdicke kann die Abbrandcharakteristik der Tablette beeinflusst werden.

Die Mantelschicht umhüllt mit Ausnahme des Randabschnitts den Kern vollständig. Die Positionierung des Randabschnitts relativ zum Kern ist dabei beliebig. Beispielsweise kann der Randabschnitt mittig zum Kern oder leicht versetzt zum Kern angeordnet sein. Generell können auch mehrere Randabschnitte vorgesehen sein. Diese können insbesondere parallel zueinander verlaufen oder sich kreuzen.

Darüber hinaus ist auch die axiale Ausdehnung des Randabschnitts beliebig, solange die axiale Ausdehnung des Randabschnitts niedriger ist als die des Kerns.

Beispielsweise kann die axiale Ausdehnung des Randabschnitts höchstens 80 % der axialen Ausdehnung des Kerns aufweisen, vorzugsweise 60 %, bevorzugt 40 %, ganz besonders bevorzugt 10 %.

Der Randabschnitt kann in axialer Richtung vorzugsweise eine Ausdehnung von 100 bis 3000 µm aufweisen, bevorzugt 100 bis 800 µm.

Dies bietet den technischen Vorteil, dass die Abbrandcharakteristik der Tablette in Abhängigkeit der axialen Ausdehnung des Randabschnitts beeinflusst werden kann.

Prinzipiell ist die Erfindung auf den Kern mit dem Randabschnitt nicht eingeschränkt. Für den Kern mit dem Randabschnitt kann daher jede beliebige Form gewählt werden, solange die oben genannten Bedingungen erfüllt sind. Vorteilhafterweise weist der Kern mit Randabschnitt eine Form auf, die mittels Kompression herstellbar ist.

Ein Aspekt der Erfindung sieht vor, dass der Kern mit dem Randabschnitt einen T-förmigen Querschnitt aufweist.

Dies bietet den Vorteil, dass ein derartig geformter Kern mit Randabschnitt besonders einfach hergestellt werden kann.

Gemäß einem anderen Aspekt der Erfindung ist vorgesehen, dass der Kern mit dem Randabschnitt einen keilförmigen Querschnitt aufweist.

Gemäß einem anderen Aspekt ist der Kern mit dem Randabschnitt konvex geformt, weiter bevorzugt, ist der Kern mit dem Randabschnitt bikonvex geformt.

Gemäß einer bevorzugten Ausführungsform ist der Kern mit dem Randabschnitt asymmetrisch bikonvex geformt

Eine asymmetrisch bikonvexe Form des Kerns mit dem Randabschnitt bietet den Vorteil, dass bei einer Herstellung desselben mittels Kompression eine besonders kompakte Verdichtung erfolgen kann. Hierdurch können insbesondere unerwünschte Lufteinschlüsse im Pressling vermieden werden.

Gemäß einem weiteren Aspekt ist vorgesehen, dass der Randabschnitt entlang einer Umfangrichtung der Manteltablette durchgängig ausgebildet ist. Auf diese Weise kann ein besonders gleichmäßige Anzündbarkeit gewährleistet werden.

Die erfindungsgemäße Tablette weist einen Kern aus einem ersten pyrotechnischen Material und eine den Kern umhüllende Mantelschicht aus einem zweiten pyrotechnischen Material auf. Prinzipiell ist das erste pyrotechnische Material in Bezug auf das zweite pyrotechnische Material nicht eingeschränkt, und umgekehrt. Das erste pyrotechnische Material unterscheidet sich in mindestens einer Eigenschaft von dem zweiten pyrotechnischen Material. Dabei ist die Art und Weise, wie sich die beiden pyrotechnischen Materialien voneinander unterscheiden, beliebig.

Insbesondere unterscheiden sich die beiden pyrotechnischen Materialien hinsichtlich mindestens einer der folgenden Eigenschaften: chemische Zusammensetzung, Abbrandrate, Abbrandtemperatur, Gasausbeute, durchschnittliche Korngröße, Partikelverteilung, Partikelmorphologie, Hygroskopizität, Selbstentzündungstemperatur, Entzündbarkeit und der Überentzündbarkeit. Die beiden pyrotechnischen Materialien können sich auch in zwei oder mehr der vorgenannten Eigenschaften unterscheiden. Auf diese Weise lässt sich je nach Auswahl des ersten oder des zweiten pyrotechnischen Materials die Abbrandcharakteristik der Tablette nach Bedarf einstellen.

Vorteilhafterweise weist das erste pyrotechnische Material eine höhere Abbrandgeschwindigkeit auf als das zweite pyrotechnische Material. Beispielsweise kann das erste pyrotechnische Material eine Abbrandgeschwindigkeit in einem Bereich von 20 bis 60 mm/s bei 20 MPa und das zweite pyrotechnische Material eine Abbrandgeschwindigkeit in einem Bereich von 5 bis 30 mm/s bei 20 MPa aufweisen. Somit kann ein degressiver Abbrand des Kerns vermieden werden, wodurch ein gleichmäßiger Abbrand der Manteltablette erreicht wird.

Gemäß einem weiteren Aspekt weist das erste pyrotechnische Material eine von dem zweiten pyrotechnischen Material verschiedene Korngröße auf, wobei das erste pyrotechnische Material eine mittlere Korngröße (D50) in einem Bereich von 1 bis 30 µm aufweist und wobei das zweite pyrotechnische Material eine mittlere Korngröße (D50) in einem Bereich von 3 bis 100 µm aufweist.

Gemäß einem Aspekt der Erfindung ist vorgesehen, dass das erste und das zweite pyrotechnische Material jeweils mindestens einen Brennstoff und ein Oxidationsmittel umfassen.

Prinzipiell ist die Erfindung in Bezug auf den Brennstoff und das Oxidationsmittel nicht eingeschränkt. Es kann jeder im Stand der Technik bekannte Brennstoff und jedes Oxidationsmittel verwendet werden, die dazu geeignet sind, ein Treibstoffelement für einen Gasgenerator zu bilden.

Vorteilhafterweise ist der Brennstoff ausgewählt aus der Gruppe bestehend aus Guanidiniumsalzen, Aluminium, Polyvinylacetat, 1-Nitroguanidin, Nitrotriazolon, Tetrazolen, Bitetrazolen und Nitrocellulose sowie Kombinationen davon.

Die oben vorgeschlagenen Brennstoffe weisen den technischen Vorteil auf, dass diese bei Aktivierung ein großes Gasvolumen erzeugen können. Auch kann mit den genannten Brennstoffen ein breiter Bereich von Abbrandgeschwindigkeiten erreicht werden. Je nach gewünschter Abbrandgeschwindigkeit kann ein anderer Brennstoff ausgewählt werden. Zudem sind diese kommerziell verfügbar und damit kostengünstig.

Das Oxidationsmittel ist insbesondere ausgewählt aus der Gruppe bestehend aus Perchloraten, Kupferoxid, basisches Kupfernitrat, basisches Kupferzinknitrat, Natriumnitrat und Kaliumnitrat sowie Kombinationen davon.

Das Oxidationsmittel dient dazu, die Abbrandgeschwindigkeit zu erhöhen. Je nach Auswahl des Oxidationsmittels kann daher die Abbrandgeschwindigkeit des Treibstoffelements beeinflusst werden.

Ferner können das erste und das zweite pyrotechnische Material jeweils mindestens einen weiteren Zusatzstoff aufweisen, ausgewählt aus der Gruppe bestehend aus Stabilisator, Brennratenmodifikator, Binder und Presszusatz sowie Kombinationen davon. Durch die Beigabe eines der oben genannten Zusätze können die Eigenschaften des Treibstoffelements verändert werden.

Als Brennratenmodifikator kann insbesondere Eisen(III)-oxid, Magnesiumoxid, Titanoxid und Aluminiumoxid verwendet werden.

Als Presszusatz kann insbesondere amorphes Silica, Calciumstearat und Schmieröl auf Kohlenwasserstoffbasis verwendet werden, vorzugsweise Schmieröl auf Basis von aliphatischen Kohlenwasserstoffverbindungen mit 15 bis 30 Kohlenstoffatomen.

Als Stabilisator kann beispielsweise Akardit II (3-Methyl-1,1-diphenylharnstoff) verwendet werden.

Als Binder können beispielsweise Alkylcellulosen, Hydroxyalkylcellulosen, Carboxymethylcellulosen, Cellulosecarboxylate, Xanthan, Hydroxyl-terminiertes Polybutadien (HTPB) und Carboxyl-terminiertes Polybutadien (CTPB) sowie Kombinationen davon verwendet werden.

Vorteilhafterweise unterscheiden sich die chemischen Zusammensetzungen des ersten und des zweiten pyrotechnischen Materials voneinander.

Gemäß einem Aspekt unterscheiden sich die beiden pyrotechnischen Materialien in der Auswahl mindestens eines der Komponenten wie Brennstoff, Oxidationsmittel und eines Zusatzstoffs.

Das erste und das zweite pyrotechnische Material können auch auf den gleichen Komponenten basieren, sich aber hinsichtlich der Anteile der Komponenten unterscheiden. Auf diese Weise kann ebenfalls eine Veränderung der Abbrandcharakteristik vorgenommen werden. Beispielsweise könnte das erste pyrotechnische Material einen erhöhten Anteil an Oxidationsmittel aufweisen, was zu einer Erhöhung die Abbrandgeschwindigkeit gegenüber dem zweiten pyrotechnischen Material führen kann.

Gemäß einem weiteren Aspekt der Erfindung umfasst das erste pyrotechnische Material die folgenden Komponenten:
(A) 10 bis 95 Gew.-%, vorzugsweise 33 bis 66 Gew.-%, mindestens eines Brennstoffs, ausgewählt aus der Gruppe bestehend aus Guanidiniumnitrat, Aluminium, Polyvinylacetat, Nitrotriazolon, 1-Nitroguanidin, Tetrazolen, Bitetrazolen und Nitrocellulose sowie Kombinationen davon;
(B) 5 bis 90 Gew.-%, vorzugsweise 25 bis 85 Gew.-%, mindestens eines Oxidationsmittels, ausgewählt aus der Gruppe bestehend aus Kaliumperchlorat, Ammoniumperchlorat, Perchloraten, Kupferoxid, basischem Kupfernitrat, basischem Kupferzinknitrat, Natriumnitrat, Kaliumnitrat und weiteren Nitratsalzen sowie Kombinationen davon und
(C) 0 bis 15 Gew.-%, vorzugsweise 0 bis 5 Gew.-%, weitere Zusatzstoffe, ausgewählt aus der Gruppe bestehend aus Eisenoxid, Magnesiumoxid, amorphes Silica, hydrophobes Silica, Calciumstearat, Stearatsalzen, Fettsäuresalzen und Schmieröl sowie Kombinationen davon, jeweils bezogen auf das Gesamtgewicht des Kerns,
wobei sich die Anteile der Komponenten (A) bis (C) zu 100 Prozent ergänzen.

Gemäß einem weiteren Aspekt umfasst das zweite pyrotechnische Material die folgenden Komponenten:
(A) 20 bis 75 Gew.-%, vorzugsweise 45 bis 65 Gew.-%, mindestens eines Brennstoffs aus der Gruppe bestehend aus Guanidiniumnitrat und Bitetrazol sowie Kombinationen davon;
(B) 25 bis 60 Gew.-%, vorzugsweise 39 bis 56 Gew.-%, mindestens eines Oxidationsmittels, ausgewählt aus der Gruppe bestehend aus Ammoniumperchlorat, Kaliumperchlorat, Perchloraten, Natriumnitrat, Kupferoxid und basischem Kupfernitrat, basischem Kupferzinknitrat und weiteren Nitratsalzen sowie Kombinationen davon; und
(C) 0 bis 15 Gew.-%, vorzugsweise 0 bis 5 Gew.-%, weitere Zusatzstoffe, ausgewählt aus der Gruppe bestehend aus Eisenoxid, Titanoxid, Aluminiumoxid und Calciumstearat, Stearatsalzen und Fettsäuresalzen sowie Kombinationen davon, jeweils bezogen auf das Gesamtgewicht der Mantelschicht,
wobei sich die Anteile der Komponenten (A) bis (C) zu 100 Prozent ergänzen.

Die oben vorgeschlagenen Zusammensetzungen des ersten und des zweiten pyrotechnischen Materials eignen sich besonders für die Verwendung in einer Manteltablette für einen Gasgenerator. Die Zusammensetzung des ersten pyrotechnischen Materials weist dabei eine schnellere Abbrandgeschwindigkeit auf, als die Zusammensetzung des zweiten pyrotechnischen Materials. Eine Tablette, welche die oben genannten Zusammensetzungen beinhaltet, weist insbesondere eine verringerte Degressivität des Abbrands auf.

Die Tablette kann auf mindestens einer ihrer Stirnseiten und/oder den Mantelseiten mit einer Zusatzbeschichtung versehen sein. Durch die Zusatzbeschichtung können weitere Funktionalitäten der Tablette erreicht werden. Dabei ist es von Vorteil, die Zusatzbeschichtung auf einer der Stirnseiten anzubringen, da auf diese Weise der Randabschnitt von der Zusatzbeschichtung nicht verdeckt wird. Damit wird die Zugänglichkeit des Kerns nicht beeinträchtigt.

Allerdings ist es auch denkbar, dass die Zusatzbeschichtung die komplette Tablette umhüllt, also neben den Stirnseiten auch auf den Mantelseiten angeordnet ist, oder dass nur die Mantelseiten mit der Zusatzbeschichtung versehen sind.

Die Zusatzbeschichtung kann insbesondere eine Feuchteschutzbeschichtung umfassen. Eine mit einer solchen Zusatzbeschichtung versehene Tablette weist vorteilhafterweise eine höhere Lagerstabilität bei einer hohen Luftfeuchtigkeit auf.

Als Feuchteschutzbeschichtung können beispielsweise hydrophobe Polymere, insbesondere Silicone, Polyurethane, Polyester verwendet werden.

Die Zusatzbeschichtung kann eine Frühzündschicht umfassen, welche ein die Anzündbarkeit der Tablette förderndes Material beinhaltet.

Als Frühzündschicht kann beispielsweise eine Nitrocellulose und/oder Nitrotriazolon enthaltende pyrotechnische Formulierung verwendet werden.

Auf diese Weise lässt sich die Anzündbarkeit der Tablette kostengünstig erhöhen.

Ferner betrifft die Erfindung ein Verfahren zur Herstellung eines Treibstoffelements. Das Verfahren umfasst die folgenden Schritte:
a) Bereitstellen einer Pressmatrize;
b) Befüllen der Pressmatrize mit einem zweiten pyrotechnischen Material;
c) Pressen des zweiten pyrotechnischen Materials unter Ausbildung einer Mantelschichtunterseite;
d) Weiteres Befüllen der Pressmatrize mit einem ersten pyrotechnischen Material;
e) Pressen des ersten pyrotechnischen Materials unter Ausbildung des Kerns mit einem Randabschnitt;
f) Weiteres Befüllen der Pressmatrize mit dem zweiten pyrotechnischen Material aus Schritt c); und
g) Fertigpressen unter Ausbildung einer Mantelschichtoberseite und unter Erhalt des Treibstoffelements.

Das oben beschriebene Verfahren ermöglicht die Herstellung der erfindungsgemäßen Manteltablette mittels Kompressionsmaschinen. Die Herstellung von Tabletten mittels Kompressionsmaschinen ist bekannt und wird bereits seit langem in der Pharmaindustrie angewendet. Somit sind die erfindungsgemäße Manteltablette sowie das Verfahren zur Herstellung der Manteltablette besonders kostengünstig.

Zudem ermöglicht das oben beschriebene Verfahren die Mantelschicht auf den Kern aufzupressen. Dadurch kann ein kostenintensives Dragieren oder Laminieren der Mantelschicht auf den Kern vermieden werden.

Ferner betrifft die Erfindung eine Verwendung eines oben genannten Treibstoffelements als Manteltablette für eine Sicherheitseinrichtung in einem Fahrzeug, insbesondere in einem Gasgenerator.

### Beispiele

In den Tabellen 1 und 2 sind konkrete Zusammensetzungen für das erste und das zweite pyrotechnische Material gegeben.

Tabelle 1 zeigt beispielhafte Zusammensetzungen für das erste pyrotechnische Material. Tabelle 2 zeigt beispielhafte Zusammensetzungen für das zweite pyrotechnische Material.

Die gegebenen Zusammensetzungen sind lediglich exemplarisch und nicht in einem einschränkenden Sinn auszulegen.

Das erste pyrotechnische Material kann insbesondere eines der folgenden Treibstoffe enthalten.

### Beispiel 1:

Für das erste pyrotechnische Material kann ein Treibstoff mit der Bezeichnung 1-A verwendet werden. Diese besteht aus Nitrotriazolon in einem Anteil von 33 bis 37 Gew.-%, Guanidiniumnitrat in einem Anteil von 28 bis 32 Gew.-%, Kaliumperchlorat in einem Anteil von 32 bis 36 Gew.-% und C15-C30-Schmieröl in einem Anteil von 0 bis 2 Gew.-%.

### Beispiel 2:

Für das erste pyrotechnische Material kann ein Treibstoff mit der Bezeichnung 1-B verwendet werden. Diese besteht aus Nitrotriazolon in einem Anteil von 78 bis 82 Gew.-%, Guanidiniumnitrat in einem Anteil von 9 bis 11 Gew.-%, Kaliumperchlorat in einem Anteil von 9 bis 11 Gew.-% und C15-C30-Schmieröl in einem Anteil von 0 bis 2 Gew.-%.

### Beispiel 3:

Für das erste pyrotechnische Material kann ein Treibstoff mit der Bezeichnung 1-C verwendet werden. Diese besteht aus Polyvinylacetat in einem Anteil von 14 bis 21 Gew.-%, Kaliumperchlorat in einem Anteil von 75 bis 85 Gew.-%, Eisen(III)-oxid in einem Anteil von 0 bis 3 Gew.-% und Magnesiumoxid in einem Anteil von 0 bis 3 Gew.-%.

### Beispiel 4:

Für das erste pyrotechnische Material kann ein Treibstoff mit der Bezeichnung 1-D verwendet werden. Diese besteht aus Polyvinylacetat in einem Anteil von 15 bis 21 Gew.-%, Kaliumperchlorat in einem Anteil von 74 bis 84 Gew.-%, Eisen(III)-oxid in einem Anteil von 0 bis 3 Gew.-% und Magnesiumoxid in einem Anteil von 0 bis 3 Gew.-%.

### Beispiel 5:

Für das erste pyrotechnische Material kann ein Treibstoff mit der Bezeichnung 1-E verwendet werden. Diese besteht aus Polyvinylacetat in einem Anteil von 17 bis 21 Gew.-%, Kaliumperchlorat in einem Anteil von 74 bis 84 Gew.-%, Eisenoxid in einem Anteil von 0 - 3 Gew.-%, und Magnesiumoxid in einem Anteil von 0 bis 3 Gew.-%.

### Beispiel 6:

Für das erste pyrotechnische Material kann ein Treibstoff mit der Bezeichnung 1-F verwendet werden. Diese besteht aus 1-Nitroguanidin in einem Anteil von 55 bis 50 Gew.-%, Kaliumperchlorat in einem Anteil von 40 bis 45 Gew.-%, Kupferoxid in einem Anteil von 1 bis 3 Gew.-%, und amorphes Silica in einem Anteil von 0 bis 4 Gew.-%.

### Beispiel 7:

Für das erste pyrotechnische Material kann ein Treibstoff mit der Bezeichnung 1-G verwendet werden. Diese besteht aus Guanidiniumnitrat in einem Anteil von 60 bis 62 Gew.-%, Kaliumperchlorat in einem Anteil von 34 bis 37 Gew.-%, Kupferoxid in einem Anteil von 1 bis 3 Gew.-% und Calciumstearat in einem Anteil von 0 bis 2 Gew.-%.

Es ist auch denkbar, dass das erste pyrotechnische Material eine Kombination der oben genannten Treibstoffe umfasst.

Das zweite pyrotechnische Material kann insbesondere eines der folgenden Treibstoffe enthalten.

### Beispiel 8:

Für das zweite pyrotechnische Material kann ein Treibstoff mit der Bezeichnung 2-A verwendet werden. Diese besteht aus Guanidiniumnitrat in einem Anteil von 47 bis 53 Gew.-%, basischem Kupfernitrat in einem Anteil von 42 bis 48 Gew.-%, Eisen(III)-oxid in einem Anteil von 1 bis 3 Gew.-%, Titandioxid in einem Anteil von 1 bis 3 Gew.-% und Calciumstearat in einem Anteil von 0 bis 2 Gew.-%.

### Beispiel 9:

Das zweite pyrotechnische Material kann einen Treibstoff mit der Bezeichnung 2-B enthalten. Diese besteht aus Guanidiniumnitrat in einem Anteil von 43 bis 49 Gew.-%, basischem Kupfernitrat in einem Anteil von 21 bis 27 Gew.-%, Ammoniumperchlorat in einem Anteil von 3 bis 5 Gew.-%, Natriumnitrat in einem Anteil von 2 bis 4 Gew.-%, Kupferoxid in einem Anteil von 11 bis 15 Gew.-% und Eisen(III)-oxid in einem Anteil von 9 bis 11 Gew.-%.

### Beispiel 10:

Für das zweite pyrotechnische Material kann ein Treibstoff mit der Bezeichnung 2-C enthalten. Diese besteht aus Guanidiniumnitrat in einem Anteil von 49 bis 51 Gew.-%, Kaliumperchlorat in einem Anteil von 2 bis 4 Gew.-%, basischem Kupfernitrat in einem Anteil von 41 bis 44 Gew.-%, Titandioxid in einem Anteil von 0 bis 2 Gew.-%, Aluminiumoxid in einem Anteil von 1 bis 5 Gew.-% und Calciumstearat in einem Anteil von 0 bis 2 Gew.-%.

### Beispiel 11:

Für das zweite pyrotechnische Material kann ein Treibstoff mit der Bezeichnung 2-D enthalten. Diese besteht aus Guanidiniumnitrat in einem Anteil von 50 bis 56 Gew.-%, basischem Kupfernitrat in einem Anteil von 44 bis 47 Gew.-%, Titandioxid in einem Anteil von 0 bis 2 Gew.-%, Aluminiumoxid in einem Anteil von 0 bis 3 Gew.-% und Calciumstearat in einem Anteil von 0 bis 2 Gew.-%.

Das zweite pyrotechnische Material kann auch eine Kombination der oben genannten Treibstoffe umfassen.

Generell weisen die oben vorgeschlagenen Treibstoffe des zweiten pyrotechnischen Materials eine geringere Abbrandgeschwindigkeit auf, als die Treibstoffe des ersten pyrotechnischen Materials.

Die Treibstoffe der Beispiele 1 bis 6 weisen eine Abbrandgeschwindigkeit in einem Bereich von 24 bis 50 mm/s bei 20 MPa auf.

Die Treibstoffe der Beispiele 7 bis 10 weisen eine Abbrandgeschwindigkeit in einem Bereich von 15 bis 30 mm/s bei 20 MPa auf.

Die Abbrandgeschwindigkeiten wurden mittels Beschuss der pyrotechnischen Materialien in einer geschlossenen Testkanne bestimmt.

**Tabelle 1.**

| **Erstes pyrotechnisches Material** | | | | | |
|---|---|---|---|---|---|
| **Bezeichnung** | **Brennstoff** | **Oxidationsmittel** | **Brennratenmodifikator** | **Presszusatz** | **Anteil [Gew.-%]** |
| **1-A** | Nitrotriazolon | | | | 33-37 |
| | Guanidiniumnitrat | | | | 28-32 |
| | | Kaliumperchlorat | | | 32-36 |
| | | | | C15-C30 Schmieröl | 0-2 |
| **1-B** | Nitrotriazolon | | | | 78-82 |
| | Guanidiniumnitrat | | | | 9-11 |
| | | Kaliumperchlorat | | | 9-11 |
| | | | | C15-C30 Schmieröl | 0-2 |
| **1-C** | Polyvinylacetat | | | | 14-21 |
| | | Kaliumperchlorat | | | 75-85 |
| | | | Eisen(III)oxid | | 0-3 |
| | | | Magnesiumoxid | | 0-3 |
| **1-D** | Polyvinylacetat | | | | 15-21 |
| | | Kaliumperchlorat | | | 74-84 |
| | | | Eisen(III)oxid | | 0-3 |
| | | | Magnesiumoxid | | 0-3 |
| **1-E** | Polyvinylacetat | | | | 17-21 |
| | | Kaliumperchlorat | | | 74-84 |
| | | | Eisen(III)oxid | | 0-3 |
| | | | Magnesiumoxid | | 0-3 |
| **1-F** | 1-Nitroguanidin | | | | 50-55 |
| | | Kaliumperchlorat | | | 40-45 |
| | | Kupferoxid | | | 1-3 |
| | | | | Silica, amorph | 0-2 |
| | | | | Silica, amorph | 0-2 |
| **1-G** | Guanidiniumnitrat | | | | 60-62 |
| | | Kaliumperchlorat | | | 34-37 |
| | | Kupferoxid | | | 1-3 |
| | | | | Calciumstearat | 0-2 |

**Tabelle 2.**

| **Zweites pyrotechnisches Material** | | | | | |
|---|---|---|---|---|---|
| **Bezeichnung** | **Brennstoff** | **Oxidationsmittel** | **Brennratenmodifikator** | **Presszusatz** | **Anteil [Gew.-%]** |
| **2-A** | Guanidiniumnitrat | | | | 47-53 |
| | | Basisches Kupfernitrat | | | 42-48 |
| | | | Eisen(III)oxid | | 1-3 |
| | | | Titandioxid | | 1-3 |
| | | | | Calciumstearat | 0-2 |
| **2-B** | Guanidiniumnitrat | | | | 43-49 |
| | | Basisches Kupfernitrat | | | 21-27 |
| | | Ammoniumperchlorat | | | 3-5 |
| | | Natriumnitrat | | | 2-4 |
| | | Kupferoxid | | | 11-15 |
| | | | Eisen(III)oxid | | 9-11 |
| **2-C** | Guanidiniumnitrat | | | | 49-51 |
| | | Kaliumperchlorat | | | 2-4 |
| | | Basisches Kupfernitrat | | | 41-44 |
| | | | Titandioxid | | 0-2 |
| | | | Aluminiumoxid | | 1-3 |
| | | | | Calciumstearat | 0-2 |
| **2-D** | Guanidiniumnitrat | | | | 50-56 |
| | | Basisches Kupfernitrat | | | 44-47 |
| | | | Titandioxid | | 0-2 |
| | | | Aluminiumoxid | | 0-3 |
| | | | | Calciumstearat | 0-2 |

Die Erfindung wird nachfolgend anhand von bevorzugten Ausführungsbeispielen in Bezug auf die beigefügten Zeichnungen näher beschrieben. In den Zeichnungen zeigen:
- Figur 1 in einer schematischen Querschnittsansicht eine Mehrschicht-Tablette mit drei Schichten aus dem Stand der Technik für einen Gasgenerator;
- Figur 2 in einer schematischen Querschnittsansicht eine Manteltablette mit einer vollständig umhüllenden Mantelschicht aus dem Stand der Technik für einen Gasgenerator;
- Figur 3 in einer schematischen Querschnittsansicht eine erfindungsgemäße Manteltablette für einen Gasgenerator;
- Figur 4 in einer schematischen Querschnittsansicht eine erfindungsgemäße Manteltablette mit einem T-förmigen Kern mit Randabschnitt;
- Figur 5 in einer schematischen Querschnittsansicht eine erfindungsgemäße Manteltablette mit einem T-förmigen Kern mit Randabschnitt, wobei der Randabschnitt eine größere axiale Ausdehnung aufweist als in Figur 4;
- Figur 6 in einer schematischen Querschnittsansicht eine erfindungsgemäße Manteltablette mit einem T-förmigen Kern mit Randabschnitt, wobei der Randabschnitt eine größere axiale Ausdehnung aufweist als in Figur 5;
- Figur 7 in einer schematischen Querschnittsansicht eine erfindungsgemäße Manteltablette mit einem T-förmigen Kern mit Randabschnitt, wobei der Randabschnitt eine größere axiale Ausdehnung aufweist als in Figur 6;
- Figur 8 eine schematische Querschnittsansicht einer erfindungsgemäßen Manteltablette mit einem keilförmigen Kern mit Randabschnitt;
- Figur 9 eine schematische Querschnittsansicht einer erfindungsgemäßen Manteltablette mit einem konvexen Kern mit Randabschnitt;
- Figur 10 in einer schematischen Querschnittsansicht eine erfindungsgemäße Manteltablette mit einem asymmetrisch bikonvexen Kern mit Randabschnitt;
- Figur 11 die asymmetrisch bikonvexe Manteltablette aus Figur 10 mit eingeblendeten Radien r₁ und r₂;
- Figur 12 eine schematische Querschnittsansicht der Manteltablette aus Figur 4 mit stirnseitig angeordneten Zusatzbeschichtungen;
- Figur 13 in einer schematischen Querschnittsansicht eine Manteltablette aus Figur 10 mit stirnseitig angeordneten Zusatzbeschichtungen;
- Figur 14 die beispielhaften Abläufe eines Verfahrens zur Herstellung einer erfindungsgemäßen Manteltablette aus Figur 4;
- Figur 15 die Abläufe eines Verfahrens zur Herstellung einer erfindungsgemäßen Manteltablette aus Figur 9 oder 10.

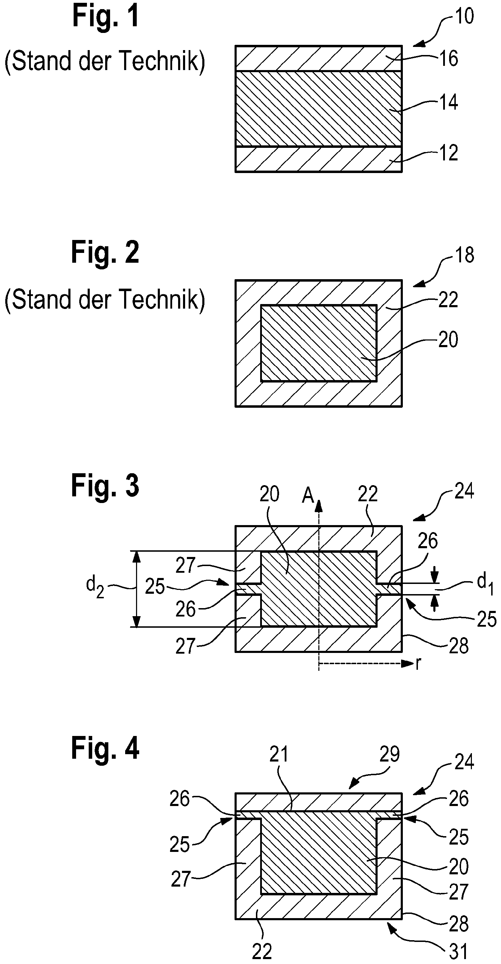

Figur 1 zeigt eine schematische Querschnittsansicht einer Mehrschicht-Tablette 10 aus dem Stand der Technik für einen Gasgenerator.

Die Mehrschicht-Tablette 10 besteht aus drei Schichten. Eine erste Schicht 12 ist auf eine Kernschicht 14 gepresst. Auf einer der ersten Schicht 12 abgewandten Seite der Kernschicht 14 ist eine wiederum eine zweite Schicht 16 gepresst.

Selbstverständlich können die oben genannten Schichten auch miteinander laminiert oder verklebt sein.

Vorzugsweise besteht die erste Schicht 12 und die zweite Schicht 16 aus einem gleichen Material. Insbesondere können die erste Schicht 12 und die zweite Schicht 16 aus demselben pyrotechnischen Material gebildet sein. Die Kernschicht 14 umfasst üblicherweise ein von der ersten und der zweiten Schicht 12, 16 unterschiedliches pyrotechnisches Material.

Die Schichtdicken der drei gezeigten Schichten 12, 14, 16 sind hier lediglich beispielhaft wiedergegeben. Die jeweiligen Schichtdicken können in einem beliebigen Verhältnis zueinanderstehen. In der Regel weist die Kernschicht 14 eine höhere Schichtdicke als die erste Schicht 12 und die zweite Schicht 16 auf.

Figur 2 zeigt eine bekannte Manteltablette 18 aus dem Stand der Technik für einen Gasgenerator.

Die Manteltablette besteht aus einem Kern 20 und eine den Kern umhüllende Mantelschicht 22. Die Mantelschicht 22 umhüllt den Kern 20 vollständig.

Der Kern 20 und die Mantelschicht 22 bestehen in der Regel aus voneinander verschiedenen Materialien. Beispielsweise kann die Mantelschicht aus einem dem Abbrand des Kerns verzögernden Material bestehen.

Figur 3 zeigt eine erfindungsgemäße Manteltablette 24, mit einer Mantelschicht 22, die einen Kern 20 umhüllt.

Der Kern 20 weist einen in radialer Richtung r vorstehenden Randabschnitt 26 auf, der sich durch die Mantelschicht 22 bis zur Außenkontur 28 der Manteltablette 24 erstreckt. Der Randabschnitt 26 ist dabei mit dem Kern 20 einstückig ausgebildet. Zudem weist die Manteltablette 24 zwei Stegabschnitte 27 auf, die als bandförmige Begrenzungsringe um die Manteltablette 24 verlaufen und den Kern 20 in seiner radialen Ausdehnung begrenzen. Dabei stellt der Stegabschnitt 27 einen Teil der Mantelschicht 22 dar und ist einstückig mit dieser ausgebildet. Die Höhe der Stegabschnitte 27 kann beliebig gewählt sein und begrenzt die axiale Ausdehnung des Randabschnitts 26 des Kerns 20. Wie in Figur 3 gut zu erkennen ist, erstreckt sich der Randabschnitt 26 in radialer Richtung bis zur Außenkontur 28 seitlich zwischen die Stegabschnitte 27 hindurch und wird dabei in seiner axialen Ausdehnung von jeweils einem Stegabschnitt 27 begrenzt.

Dabei kann der Randabschnitt 26 im Bezug zum Kern 20 axial-symmetrisch angeordnet sein. Es ist aber auch denkbar, dass der Randabschnitt 26 nicht axial-symmetrisch angeordnet ist. Beispielsweise kann der Randabschnitt 26 in Bezug zum Kern verschoben sein oder spindelartig um den Kern herum geformt sein, oder es können Bereiche des Randabschnitts gegeneinander versetzt sein.

Insbesondere verläuft der Randabschnitt 26 entlang einer Umfangsrichtung der Tablette 24 durchgängig. Mit anderen Worten weist die Mantelschicht 22 einen die Manteltablette 24 umlaufenden Zündspalt 25 auf, der vom einem Randabschnitt 26 des Kerns 20 ausgefüllt wird.

Die Ausdehnung des Randabschnitts 26 in radialer Richtung r ist bevorzugt von der Schichtdicke der Stegabschnitte 27 abhängig. Je kleiner die Schichtdicke der Stegabschnitte 27 gewählt wird, desto geringer kann die Ausdehnung des Randabschnitts 26 in radialer Richtung r gewählt werden.

Erfindungsgemäß weist der Randabschnitt 26 in einer Axialrichtung A der Manteltablette 24 eine geringere Ausdehnung auf als der Kern 20. Genauer gesagt weist der Randabschnitt 26 in der Axialrichtung A der Manteltablette 24 eine axiale Ausdehnung d₁ auf, welche kleiner ist als eine axiale Ausdehnung d₂ des Kerns 20 in Axialrichtung A der Manteltablette 24.

Die Positionierung des Randabschnitts 26 in Bezug auf den Kern 20 ist beliebig. Beispielsweise kann der Randabschnitt 26, wie in Figur 3 gut zu erkennen ist, den Kern 20 mittig einfassen. Selbstverständlich kann der Randabschnitt 26 aber auch versetzt zur Mitte des Kerns 20 angeordnet sein.

Der Kern 20 und der Randabschnitt 26 umfassen ein erstes pyrotechnisches Material.

Die Mantelschicht 22 umfasst ein zweites pyrotechnisches Material.

Das erste und das zweite pyrotechnische Material unterscheiden sich voneinander.

Insbesondere unterscheiden sich die beiden pyrotechnischen Materialien hinsichtlich mindestens einer der folgenden Eigenschaften: chemischer Zusammensetzung, Abbrandrate, Abbrandtemperatur, Gasausbeute, durchschnittliche Korngröße, Partikelverteilung, Partikelmorphologie, Hygroskopizität, Selbstentzündungstemperatur, Entzündbarkeit und der Überzündbarkeit.

Die beiden pyrotechnischen Materialien können sich auch in zwei oder mehr der vorgenannten Eigenschaften unterscheiden.

Vorteilhafterweise weist das erste pyrotechnische Material eine höhere Abbrandgeschwindigkeit auf als das zweite pyrotechnische Material.

Das erste und das zweite pyrotechnische Material umfassen jeweils mindestens einen Brennstoff und ein Oxidationsmittel.

Prinzipiell ist die Erfindung in Bezug auf den Brennstoff und das Oxidationsmittel nicht eingeschränkt. Es kann jeder im Stand der Technik bekannte Brennstoff und jedes Oxidationsmittel verwendet werden, die dazu geeignet sind, ein Treibstoffelement für einen Gasgenerator zu bilden.

Vorteilhafterweise ist der Brennstoff ausgewählt aus der Gruppe bestehend aus Guanidiniumsalzen, Aluminium, Polyvinylacetat, 1-Nitroguanidin, Nitrotriazolon, Tetrazolen, Bitetrazolen und Nitrocellulose sowie Kombinationen davon.

Das Oxidationsmittel ist insbesondere ausgewählt aus der Gruppe bestehend aus Perchloraten, Kupferoxid, basischem Kupfernitrat, basischem Kupferzinknitrat, Natriumnitrat, Kaliumnitrat und weiteren Nitratsalzen sowie Kombinationen davon.

Ferner können das erste und das zweite pyrotechnische Material jeweils mindestens einen weiteren Zusatzstoff aufweisen, ausgewählt aus der Gruppe bestehend aus Stabilisator, Brennratenmodifikator, Binder und Presszusatz sowie Kombinationen davon. Durch die Beigabe eines der oben genannten Zusätze können die Eigenschaften des Treibstoffelements verändert werden.

Als Brennratenmodifikator kann insbesondere Eisen(III)-oxid, Magnesiumoxid, Titanoxid und Aluminiumoxid verwendet werden.

Als Presszusatz kann insbesondere amorphes Silica, Calciumstearat und Schmieröl auf Kohlenwasserstoffbasis verwendet werden, vorzugsweise Schmieröl auf Basis von aliphatischen Kohlenwasserstoffverbindungen mit 15 bis 30 Kohlenstoffatomen.

Als Stabilisator kann beispielsweise Akardit II verwendet werden.

Als Binder können beispielsweise Alkylcellulosen, Hydroxyalkylcellulosen, Carboxymethylcellulosen, Cellulosecarboxylate, Xanthan, HTPB, CTPB und Kombinationen davon verwendet werden.

Vorteilhafterweise unterscheiden sich die chemischen Zusammensetzungen des ersten und des zweiten pyrotechnischen Materials voneinander.

Gemäß einem Aspekt unterscheiden sich die beiden pyrotechnischen Materialien in der Auswahl mindestens eines der Komponenten wie Brennstoff, Oxidationsmittel und Zusatzstoff.

Das erste und das zweite pyrotechnische Material können auch auf den gleichen Komponenten basieren, sich aber hinsichtlich der Anteile der Komponenten unterscheiden.

Figur 4 zeigt eine erfindungsgemäße Manteltablette 24 mit einem im Querschnitt T-förmigen Kern 20 mit Randabschnitt 26. Für die von Figur 3 bekannten Merkmale und Bauteile werden dieselben Bezugszeichen verwendet, und es wird insofern auf die obigen Erläuterungen verwiesen.

Im Unterschied zu Figur 3, bildet in Figur 4 der Kern 20 mit dem Randabschnitt 26 eine gemeinsame Stirnseite 21 gegenüber einer dem Kern 20 zugewandten Seite der Mantelschicht 22. Zudem weist die in Figur 3 gezeigte Manteltablette 24 nur einen Stegabschnitt 27 auf.

Der Randabschnitt 26 und der Kern 20 teilen die Mantelschicht 22 in eine Mantelschichtoberseite 29, welche an der Stirnseite 21 anliegt und eine Tablettenoberseite der Manteltablette 24 bildet, und eine Mantelschichtunterseite 31, die im Querschnitt U-förmig ausgebildet ist und einen der Stirnseite 21 gegenüberliegenden Teil des Kerns 20 umfasst. Die Mantelschichtunterseite 31 bildet eine Tablettenunterseite der Manteltablette 24. Genauer betrachtet weist die Tablettenunterseite einen Tablettenboden sowie einen Stegabschnitt 27, der sich vom Tablettenboden aus bis zum Randabschnitt 26 erstreckt. Damit begrenzt der Stegabschnitt 27 den Kern 20 in radialer Richtung und den Randabschnitt 26 in axialer Richtung.

Die Mantelschichtoberseite 29 und die Mantelschichtunterseite 31 können eine Wölbung aufweisen oder mit Facetten versehen sein (hier nicht gezeigt). Die Wölbung kann beispielsweise zu einer bikonvexen Form der Manteltablette führen.

Die Schichtdicke der Mantelschichtoberseite 29 und der Mantelschichtunterseite 31 ist dabei beliebig. Die Schichtdicken der Mantelschichtoberseite 29 und der Mantelschichtunterseite 31 können voneinander abweichen oder übereinstimmen.

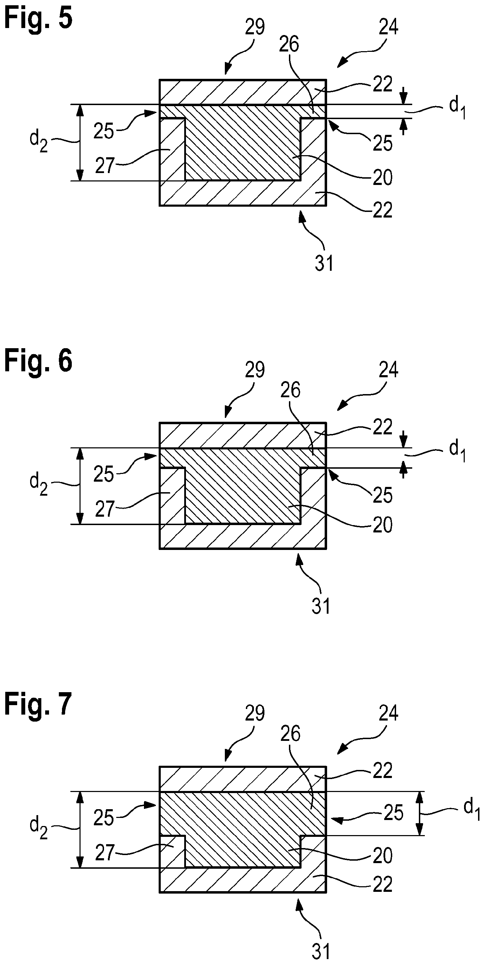

Wie oben bereits beschrieben, kann die axiale Ausdehnung *d₁* des Randabschnitts 26 beliebig gewählt werden, solange diese kleiner ist als die axiale Ausdehnung *d₂* des Kerns 20. Dieser Sachverhalt wird in den Figuren 5 bis 7 verdeutlicht, in denen eine stufenweise größere axiale Ausdehnung *d₁* des Randabschnitts 26 gegenüber der in Figur 4 dargestellten Ausdehnung des Randabschnitt 26 gezeigt wird.

Die in den Figuren 5 bis 7 dargestellte axiale Ausdehnung des Randabschnitts 26 führt dazu, dass der Zündspalt 25 in Axialrichtung A vergrößert wird, wodurch ein größerer Teil des Randabschnitts 26 exponiert wird. Damit wird auch ein größerer Teil des Kerns 20 exponiert. Folglich nimmt die Anzündbarkeit des Kerns 20 von Figur 5 zu Figur 7 zu. Auf diese Weise kann durch Variation des Zündspalts in Axialrichtung A, die Anzündbarkeit der Manteltablette 24 beeinflusst werden.

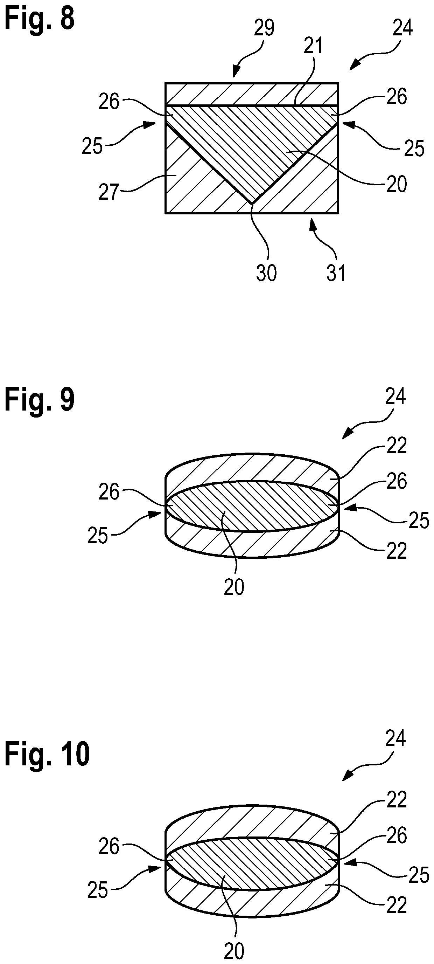

Figur 8 zeigt eine weitere Ausführungsform der erfindungsgemäßen Manteltablette 24. Für die aus den vorherigen Figuren bekannten Merkmale und Bauteile werden dieselben Bezugszeichen verwendet, und es wird insofern auf die obigen Erläuterungen verwiesen.

Die Manteltablette 24 in Figur 8 weist einen Kern 20 mit einem Randabschnitt 26 auf, wobei der Randabschnitt 26 und der Kern 20 zusammen eine keilförmige Form ausbilden.

Die Grundseite der keilförmigen Form bildet dabei die Stirnseite 21, welche benachbart zur Mantelschichtoberseite 29 angeordnet ist.

Die keilförmige Form weist auch eine Keilspitze 30 auf, die in die Mantelschichtunterseite 31 eingebettet ist.

Der Öffnungswinkel der Keilspitze 30 kann beliebig gewählt sein.

Figur 9 zeigt eine weitere Ausführungsform der erfindungsgemäßen Manteltablette 24. Für die von den vorherigen Figuren bekannten Merkmale und Bauteile werden dieselben Bezugszeichen verwendet, und es wird insofern auf die obigen Erläuterungen verwiesen.

Die in Figur 9 gezeigte Manteltablette 24 weist einen Kern 20 und einen Randabschnitt 26 auf, die zusammen eine bikonvexe Form ausbilden.

Zusätzlich weist auch die Mantelschicht 22, insbesondere die Mantelschichtober- und Unterseite 29, 31 eine bikonvexe Form auf.

Der Kern 20 und die Mantelschicht 22 können den gleichen Radius aufweisen. Dies vereinfacht insbesondere die Herstellung einer solchen Manteltablette 24. Allerdings können der Kern 20 und die Mantelschicht 22 auch jeweils voneinander verschiedene Radien aufweisen.

In dieser Ausführungsform werden die Randabschnitte 26 von den spitzen Enden des bikonvexen Kerns 20 gebildet.

Figur 10 zeigt die Manteltablette 24 aus Figur 9, mit dem Unterschied, dass der Kern 20 und der Randabschnitt 26 zusammen eine asymmetrisch bikonvexe Form aufweisen.

Somit weist auch die Mantelschicht 22 eine asymmetrisch bikonvexe Form auf.

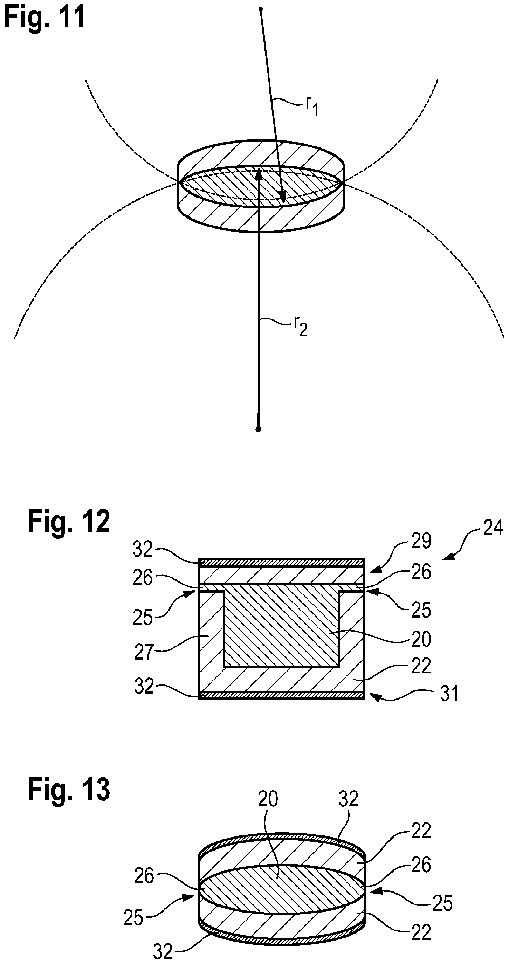

Figur 11 verdeutlicht den Aufbau der asymmetrisch bikonvexen Form aus Figur 10.

Der Kern 20 mit dem Randabschnitt 26 weist zwei verschiedene Radien r₁ und r₂ auf. Der Radius r₁ unterscheidet sich dabei vom Radius r₂. Beispielsweise ist, wie in Figur 11 gezeigt, der Radius r₂ größer als der Radius r₁.

Figur 12 zeigt die erfindungsgemäße Manteltablette 24 aus Figur 4, mit dem Unterschied, dass auf beiden Stirnseiten der Manteltablette 24 eine Zusatzbeschichtung 32 vorgesehen ist.

Die Zusatzbeschichtung 32 ist so angeordnet, dass der Randabschnitt 26 der Manteltablette 24 nicht verdeckt wird.

Die Schichtdicke der Zusatzbeschichtung 32 ist nicht eingeschränkt und kann je nach Bedarf gewählt werden.

Die Zusatzbeschichtung 32 kann insbesondere eine Feuchteschutzbeschichtung umfassen. Eine mit einer solchen Zusatzbeschichtung 32 versehene Manteltablette 24 weist vorteilhafterweise eine höhere Lagerstabilität bei einer hohen Luftfeuchtigkeit auf.

Als Feuchteschutzbeschichtung können beispielsweise hydrophobe Polymere, insbesondere Silicone, Polyurethane, Polyester verwendet werden.

Die Zusatzbeschichtung kann eine Frühzündschicht umfassen, welche ein die Anzündbarkeit der Tablette förderndes Material beinhaltet.

Als Frühzündschicht kann beispielsweise eine Nitrocellulose, Nitrotriazolon enthaltende pyrotechnische Formulierung verwendet werden.

Figur 13 zeigt eine erfindungsgemäße Manteltablette 24 aus Figur 10 mit dem Unterschied, dass auf den Stirnseiten der Manteltablette 24 eine Zusatzbeschichtung 32 angeordnet ist.

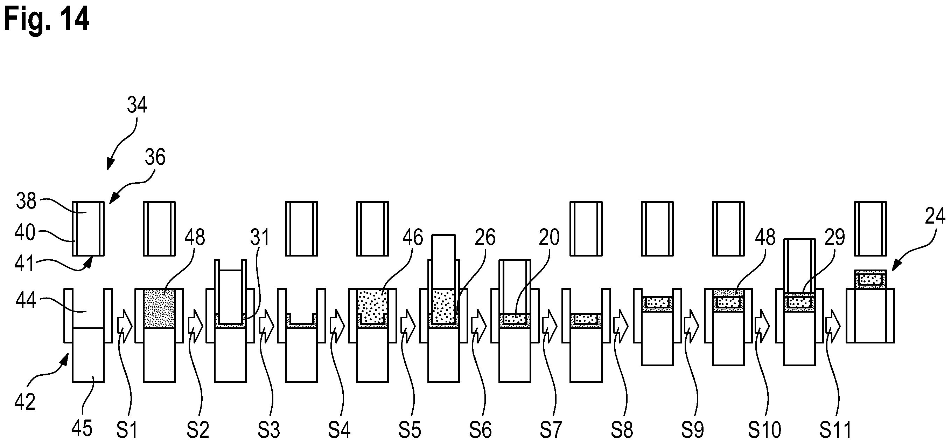

Figur 14 zeigt ein Verfahren zur Herstellung einer erfindungsgemäßen Manteltablette 24 aus Figur 4.Im Folgenden wird das Verfahren genauer erläutert.

Die Herstellung der erfindungsgemäßen Manteltablette 24 erfolgt in einer Presse 34.

Die Presse 34 beinhaltet einen Oberstempel 36, eine Pressmatrize 42 und einen Unterstempel 45.

Der Oberstempel 36 und der Unterstempel 45 sind gegenüberliegend angeordnet.

Die Pressmatrize 42 und der Unterstempel 45 definieren eine Aufnahmekammer 44, insbesondere eine zylindrisch geformte oder eine elliptisch geformte Aufnahmekammer 44. Zudem kann der Unterstempel 45 gegen die Pressmatrize 42 verschoben werden.

Insbesondere kann die Aufnahmekammer 44 ein Negativ zum Oberstempel 36 bilden.

Der Oberstempel 36 ist dazu eingerichtet, in Richtung der Pressmatrize 42 verschoben zu werden und in die Aufnahmekammer 44 hineinzugreifen.

Grundsätzlich weist der Oberstempel 36 eine zylindrische Form auf und umfasst einen Innenstempel 38 und einen Außenstempel 40.

Der Außenstempel 40 fasst den Innenstempel 38 seitlich ein, wobei der Innenstempel 38 gleitend in dem Außenstempel 40 gelagert ist. Somit kann der Innenstempel 38 gegen den Außenstempel 40 verschoben werden. Ferner bildet der Außenstempel 40 mit dem Innenstempel 38 eine gemeinsame Stirnfläche 41, mit welcher der Oberstempel 36 bei einem Kompressionsvorgang in die Aufnahmekammer 44 der Pressmatrize 42 hineingreift.

Jedoch ist es auch denkbar, dass für die einzelnen Verfahrensschritte verschiedene Oberstempel 40 verwendet werden, die sich jeweils hinsichtlich des Ausmaßes der Verschiebung des Innenstempels 38 gegen den Außenstempels 40 unterscheiden. In diesem Fall ist der Innenstempel 38 einstückig mit dem Außenstempel 40 ausgebildet. Beispielsweise kann bei den Verfahrensschritten S2, S5, S6 und S10 jeweils ein separater Oberstempel 40 verwendet werden.

In einem ersten Schritt wird die Aufnahmekammer 44 mit einem zweiten pyrotechnischen Material 48 gefüllt (S1).

Anschließend wird der Oberstempel 36 in die Aufnahmekammer 44 der Pressmatrize 42 hineingedrückt und zweite pyrotechnische Material 48 wird verdichtet (S2). Bei diesem Kompressionsvorgang wird der Innenstempel 38 weiter in die Aufnahmekammer 44 hineingeschoben als der Außenstempel 40. Auf diese Weise kann das zweite pyrotechnische Material 48 unter Erhalt einer Mantelschichtunterseite 31 ausgebildet werden. Da der Außenstempel 40 im Vergleich zum Innenstempel 38 versetzt in die Aufnahmekammer hineingeschoben wird, bildet sich insbesondere eine im Querschnitt U-förmige Mantelschichtunterseite 31 aus. Die Mantelschichtunterseite 31 ist dabei zum Oberstempel 36 hin geöffnet.

Danach wird der Oberstempel 36 wieder aus der Pressmatrize 42 zurückgezogen (S3) und in der Pressmatrize 42 verbleibt die fertiggepresste Mantelschichtunterseite 31.

Anschließend wird die Aufnahmekammer 44 mit einem ersten pyrotechnischen Material 46 gefüllt (S4).

Im nächsten Schritt wird der Oberstempel 36 wieder in die Aufnahmekammer 44 hineingedrückt, wobei zunächst nur der Außenstempel 40 in die Aufnahmekammer 44 hineingedrückt wird (S5). Auf diese Weise wird ein Randabschnitt 26 aus dem ersten pyrotechnischen Material 46 auf seitlich vorstehende Bereiche der Mantelschichtunterseite 31 aufgepresst.

Nun wird der Innenstempel 38 soweit in die Aufnahmekammer 44 hineingedrückt (S6), bis dieser wieder eine gemeinsame Stirnfläche 41 mit dem Außenstempel 40 bildet. Somit wird ein Kern 20 in die zum Oberstempel 36 hin geöffnete Mantelschichtunterseite 31 hineingepresst.

Anschließend wird der Oberstempel 36 wieder aus der Pressmatrize 42 herausgezogen (S7) unter Erhalt eines Presslings bestehend aus der Mantelschichtunterseite 31, die einen vorverdichteten Kern 20 mit Randabschnitt 26 umfasst.

Der Pressling wird durch den Unterstempel 45 in der Aufnahmekammer 44 in Richtung des Oberstempels 36 bewegt (S8).

Schließlich wird in die Aufnahmekammer 44 wieder das zweite pyrotechnische Material 48 eingefüllt (S9).

Schlussendlich wird der Oberstempel 36 wieder in die Aufnahmekammer 44 hineingedrückt oder die Pressmatrize 42 wird bewegt bzw. allgemein betrachtet wird der Abstand zwischen dem Oberstempel und der Pressmatrize 42 soweit reduziert, sodass das zweite pyrotechnische Material 48 unter Erhalt der Mantelschichtoberseite 29 und damit der fertigen Manteltablette 24 gepresst wird (S10).

Im letzten Schritt wird der Oberstempel 36 aus der Aufnahmekammer 44 zurückgezogen. Zudem wird der Unterstempel 45 so weit in Richtung Oberstempel 36 verschoben, dass die Aufnahmekammer 44 vollständig durch den Unterstempel 45 eingenommen wird (S11). Die Manteltablette 24 kann der Presse 34 entnommen werden.

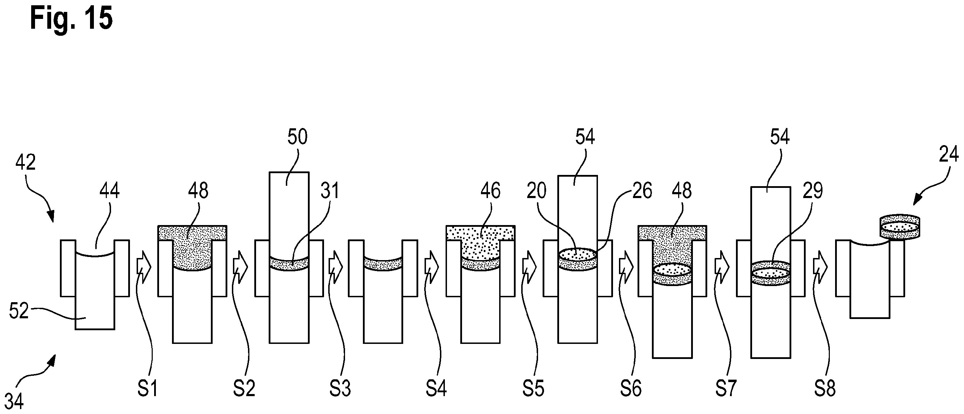

Figur 15 beschreibt die Abläufe eines Verfahrens zur Herstellung einer Manteltablette 24 mit einem bikonvex, wahlweise einen asymmetrisch bikonvex, geformten Kern mit Randabschnitt.

Im Folgenden werden die Abläufe dieses Verfahrens genauer erläutert.

Zunächst wird die gleiche Presse 34 bereitgestellt wie in Figur 14, mit dem Unterschied, dass ein konvexer Oberstempel 50 sowie ein konkaver Oberstempel 54 verwendet wird. Zudem wird in der Presse 34 ein konkaver Unterstempel 52 verwendet.

Konvex und konkav bedeutet in diesem Sinne, dass lediglich die jeweiligen Stirnseiten der Stempel 50, 52, 54 eine Krümmung aufweisen. Für die Herstellung einer bikonvexen Manteltablette 24 entspricht die Krümmung des konvexen Oberstempels 50 der des konkaven Unterstempels 52. Die Herstellung einer asymmetrisch bikonvex geformten Manteltablette erfolgt durch die Verwendung eines konkaven Unterstempels 52 und eines konkaven Oberstempels 54, die nicht die gleiche Krümmung auf ihren Stirnseiten aufweisen.

Dabei weist die Stirnseite des konvexen Oberstempels 50 eine Krümmung mit einem Radius auf, welcher der Krümmung der Stirnseite des konkaven Unterstempels 52 entspricht. Der konkave Unterstempel 52 ist so gekrümmt, dass der konvexe Oberstempel 50 in den Unterstempel eingreifen kann, insbesondere dass der konvexe Oberstempel 50 formschlüssig in den Unterstempel eingreifen kann.

Mit anderen Worten weist die Stirnseite des Oberstempels 50 bevorzugt eine konvexe Form auf, die komplementär zu einer konkaven Form des Unterstempels 52 ist.

In einem ersten Schritt wird die Aufnahmekammer 44 mit einem zweiten pyrotechnischen Material 48 gefüllt (S1).

Anschließend wird ein konvexer Oberstempel 50 in die Aufnahmekammer 44 hineingedrückt und das zweite pyrotechnische Material 48 wird verdichtet unter Erhalt einer Mantelschichtunterseite 31 (S2).

Da sowohl der konkave Unterstempel 52 als auch der konvexe Oberstempel 50 auf ihren Stirnseiten komplementär geformt sind, ist auch die aus der Pressung resultierende Mantelschichtunterseite 31 konvex geformt.

Der konvexe Oberstempel 50 wird zunächst aus der Aufnahmekammer 44 zurückgeschoben und aus der Presse entfernt (S3).

Die Aufnahmekammer 44 wird mit einem ersten pyrotechnischen Material 46 gefüllt (S4).

Im nächsten Schritt wird das erste pyrotechnische Material 46 durch das Hineinschieben eines konkaven Oberstempels 54 in der Aufnahmekammer 44 verdichtet unter Erhalt eines Kerns 20 mit einem Randabschnitt 26 (S5).

Da die in der Pressmatrize 42 vorliegende Mantelschichtunterseite 31 eine konvexe Form vorgibt und der von der anderen Seite in die Aufnahmekammer 44 hineingeschobene konkave Oberstempel 54 eine konkave Form vorgibt, resultiert aus diesem Pressvorgang ein Kern 20 mit einem Randabschnitt 26, der eine bikonvexe Form aufweist.

Wahlweise kann für den obigen Schritt ein konkaver Oberstempel 54 verwendet werden, welcher eine von der Krümmung des konkaven Unterstempels 52 abweichende Krümmung aufweist. Somit kann ein asymmetrisch bikonvexer geformter Kern 20 gepresst werden.

Im nächsten Schritt kann der konkave Oberstempel 54 wieder aus der Pressmatrize 42 hinausgeschoben werden und erneut kann ein zweites pyrotechnisches Material 48 in die Aufnahmekammer 44 eingefüllt werden (S6).

Schließlich kann das zweite pyrotechnische Material 48 durch den konkaven Oberstempel 54 fertig gepresst werden oder der Unterstempel wird bewegt bzw. allgemein betrachtet wird der Abstand zwischen Ober- und Unterstempel reduziert, um eine Vorpressung zu erreichen, unter Erhalt einer konvex geformten Mantelschichtoberseite 29 (S7).

Wahlweise kann für den obigen Schritt ein konkaver Oberstempel 54 verwendet werden, welcher eine von dem konkaven Unterstempel 52 abweichende Krümmung aufweist. Hieraus resultiert eine asymmetrisch bikonvex geformte Manteltablette 24.

Im letzten Schritt kann die bikonvex, wahlweise asymmetrisch bikonvex, geformte Manteltablette 24 aus der Pressmatrize 42 entnommen werden (S8).

## Patentansprüche

1. Treibstoffelement für einen Gasgenerator zur Verwendung in einer Sicherheitseinrichtung in Form einer Manteltablette (24), wobei die Manteltablette (24) einen Kern (20) aus einem ersten pyrotechnischen Material (46) und eine den Kern (20) umhüllende Mantelschicht (22) aus einem zweiten pyrotechnischen Material (48) umfasst, wobei sich das erste pyrotechnische Material (46) von dem zweiten pyrotechnischen Material (48) unterscheidet **dadurch gekennzeichnet dass**, der Kern (20) einen in radialer Richtung vorstehenden Randabschnitt (26) aufweist, der sich durch die Mantelschicht (22) bis zur einer Außenkontur (28) der Manteltablette (24) erstreckt, wobei der Randabschnitt (26) entlang einer Umfangrichtung der Manteltablette (24) ausgebildet ist und in Axialrichtung der Manteltablette (24) eine geringere Ausdehnung als der Kern (20) aufweist.

2. Treibstoffelement nach Anspruch 1, **dadurch gekennzeichnet, dass** der Kern (20) mit dem Randabschnitt (26) einen T-förmigen Querschnitt aufweist.

3. Treibstoffelement nach Anspruch 1, **dadurch gekennzeichnet, dass** der Kern (20) mit dem Randabschnitt (26) einen keilförmigen Querschnitt aufweist.

4. Treibstoffelement nach Anspruch 1, **dadurch gekennzeichnet, dass** der Kern (20) mit dem Randabschnitt (26) konvex geformt ist, weiter bevorzugt, dass der Kern (20) mit dem Randabschnitt (26) bikonvex geformt ist.

5. Treibstoffelement nach Anspruch 1, **dadurch gekennzeichnet** der Kern (20) mit dem Randabschnitt (26) asymmetrisch bikonvex geformt.

6. Treibstoffelement nach einem der vorhergehenden Ansprüche, **dadurch gekennzeichnet, dass** der Randabschnitt (26) entlang einer Umfangrichtung der Manteltablette (24) durchgängig ausgebildet ist.

7. Treibstoffelement nach einem der vorhergehenden Ansprüche, **dadurch gekennzeichnet, dass** eine axiale Ausdehnung des Randabschnitts (26) höchstens 80 % einer axialen Ausdehnung des Kerns (20) beträgt, vorzugsweise 60 %, bevorzugt 40 %, ganz besonders bevorzugt 10 %.

8. Treibstoffelement nach einem der vorhergehenden Ansprüche, **dadurch gekennzeichnet, dass** das erste pyrotechnische Material (46) eine höhere Abbrandgeschwindigkeit als das zweite pyrotechnische Material (48) aufweist.

9. Treibstoffelement nach einem der vorhergehenden Ansprüche, **dadurch gekennzeichnet, dass** das erste pyrotechnische Material (46) eine Abbrandgeschwindigkeit in einem Bereich von 20 bis 60 mm/s bei 20 MPa und das zweite pyrotechnische Material (48) eine Abbrandgeschwindigkeit in einem Bereich von 5 bis 30 mm/s bei 20 MPa aufweist.

10. Treibstoffelement nach einem der vorhergehenden Ansprüche, **dadurch gekennzeichnet, dass** das erste pyrotechnische Material (46) die folgenden Komponenten umfasst:
(A) 10 bis 95 Gew.-%, vorzugsweise 33 bis 66 Gew.-%, mindestens eines Brennstoffs ausgewählt aus der Gruppe bestehend aus Guanidiniumnitrat, Aluminium, Polyvinylacetat, Nitrotriazolon, Tetrazolen, Bitetrazolen, Nitrocellulose und 1-Nitroguanidin sowie Kombinationen davon;
(B) 5 bis 90 Gew.-%, vorzugsweise 25 bis 85 Gew.-%, mindestens eines Oxidationsmittels ausgewählt aus der Gruppe bestehend aus Kaliumperchlorat, Ammoniumperchlorat, Perchloraten, Kupferoxid, basischem Kupfernitrat, basischem Kupferzinknitrat, Natriumnitrat, Kaliumnitrat und weiteren Nitratsalzen sowie Kombinationen davon, und
(C) 0 bis 15 Gew.-%, vorzugsweise 0 bis 5 Gew.-%, weitere Zusatzstoffe ausgewählt aus der Gruppe bestehend aus Eisenoxid, Magnesiumoxid, amorphes Silica, hydrophobes Silica, Calciumstearat, Stearatsalzen, Fettsäuresalzen und Schmieröl sowie Kombination davon, jeweils bezogen auf das Gesamtgewicht des Kerns,
wobei sich die Anteile der Komponenten (A) bis (C) zu 100 Prozent ergänzen.

11. Treibstoffelement nach einem der vorhergehenden Ansprüche, **dadurch gekennzeichnet, dass** das zweite pyrotechnische Material (48) die folgenden Komponenten umfasst:
(A) 20 bis 75 Gew.-%, vorzugsweise 45 bis 65 Gew.-%, mindestens eines Brennstoffs aus der Gruppe bestehend aus Guanidiniumnitrat, 1-Nitroguanidin, Tetrazolen und Bitetrazolen sowie Kombinationen davon;
(B) 25 bis 60 Gew.-%, vorzugsweise 39 bis 56 Gew.-%, mindestens eines Oxidationsmittels ausgewählt aus der Gruppe bestehend aus Ammoniumperchlorat, Kaliumperchlorat, Perchloraten, Kupferoxid, basischem Kupfernitrat, basischem Kupferzinknitrat, Natriumnitrat, Kaliumnitrat und weiteren Nitratsalzen, sowie Kombinationen davon; und
(C) 0 bis 15 Gew.-%, vorzugsweise 0 bis 5 Gew.-%, weitere Zusatzstoffe ausgewählt aus der Gruppe bestehend aus Eisenoxid, Titanoxid, Aluminiumoxid und Calciumstearat, Stearatsalzen und Fettsäuresalzen sowie Kombination davon, jeweils bezogen auf das Gesamtgewicht des Aufnahme- und des Verschlusselements,
wobei sich die Anteile der Komponenten (A) bis (C) zu 100 Prozent ergänzen.

12. Treibstoffelement nach einem der vorhergehenden Ansprüche, **dadurch gekennzeichnet, dass** das erste pyrotechnische Material (46) eine von einem zweiten pyrotechnischen Material (48) verschiedene Korngröße aufweist, wobei das erste pyrotechnische Material (46) eine mittlere Korngröße (D50) in einem Bereich von 1 bis 30 µm aufweist und wobei das zweite pyrotechnische Material (48) eine mittlere Korngröße (D50) in einem Bereich von 3 bis 100 µm aufweist.

13. Treibstoffelement nach einem der vorhergehenden Ansprüche, **dadurch gekennzeichnet, dass** die Manteltablette (24) ferner auf mindestens einer ihrer Stirnseiten mit einer Zusatzbeschichtung (32) versehen ist, wobei die Zusatzbeschichtung (32) vorzugsweise ein die Anzündbarkeit der Manteltablette (24) förderndes Material umfasst.

14. Verfahren zur Herstellung eines Treibstoffelements nach einem der vorhergehenden Ansprüche, **dadurch gekennzeichnet, dass** das Verfahren die folgenden Schritte aufweist:
a) Bereitstellen einer Pressmatrize;
b) Befüllen der Pressmatrize mit einem zweiten pyrotechnischen Material;
c) Pressen des zweiten pyrotechnischen Materials unter Ausbildung einer Mantelschichtunterseite;
d) Weiteres Befüllen der Pressmatrize mit einem ersten pyrotechnischen Material;
e) Pressen des ersten pyrotechnischen Materials unter Ausbildung des Kerns mit einem Randabschnitt;
f) Weiteres Befüllen der Pressmatrize mit dem zweiten pyrotechnischen Material aus Schritt c);
g) Fertigpressen unter Ausbildung einer Mantelschichtoberseite und unter Erhalt des Treibstoffelements.

15. Verwendung eines Treibstoffelements nach einem der vorhergehenden Ansprüche 1 bis 13 in einer Sicherheitseinrichtung in einem Fahrzeug, insbesondere in einem Gasgenerator.

## Claims

1. A propellant element for a gas generator for use in a safety device in the form of a coated pellet (24), the coated pellet (24) comprising a core (20) made of a first pyrotechnical material (46) and a coating (22) made of a second pyrotechnical material (48) and enveloping the core (20), wherein the first pyrotechnical material (46) is different from the second pyrotechnical material (48), and wherein the core (20) has an edge portion (26) projecting in the radial direction which extends through the coating (22) up to an outer contour (28) of the coated pellet (24), wherein the edge portion (26) is formed along a circumferential direction of the coated pellet (24) and has a smaller expansion than the core (20) in the axial direction of the coated pellet (24).

2. The propellant element according to claim 1, **characterized in that** the core (20) with the edge portion (26) has a T-shaped cross-section.

3. The propellant element according to claim 1, **characterized in that** the core (20) with the edge portion (26) has a wedge-shaped cross-section.

4. The propellant element according to claim 1, **characterized in that** the core (20) with the edge portion (26) is convexly shaped, further preferably that the core (20) with the edge portion (26) is bi-convexly shaped.

5. The propellant element according to claim 1, **characterized in that** the core (20) with the edge portion (26) is asymmetrically bi-convexly shaped.

6. The propellant element according to any one of the preceding claims, **characterized in that** the edge portion (26) is formed continuously along a circumferential direction of the coated pellet (24).

7. The propellant element according to any one of the preceding claims, **characterized in that** an axial extension of the edge portion (26) amounts to not more than 80%, preferably 60%, of preference 40%, particularly preferred 10%, of an axial extension of the core (20).

8. The propellant element according to any one of the preceding claims, **characterized in that** the first pyrotechnical material (46) exhibits a higher burning rate than the second pyrotechnical material (48).

9. The propellant element according to any one of the preceding claims, **characterized in that** the first pyrotechnical material (46) exhibits a burning rate in a range from 20 to 60 mm/s at 20 MPas and the second pyrotechnical material (48) exhibits a burning rate in a range from 5 to 30 mm/s at 20 MPas.

10. The propellant element according to any one of the preceding claims, **characterized in that** the first pyrotechnical material (46) comprises the following components:
(A) 10 to 95 wt.%, preferably 33 to 66 wt.%, of at least one fuel selected from the group consisting of guanidinium nitrate, aluminum, polyvinyl acetate, nitrotriazolone, tetrazoles, bi-tetrazoles, nitrocellulose and 1-nitroguanidine, as well as combinations thereof;
(B) 5 to 90 wt.%, preferably 25 to 85 wt.%, of at least one oxidizing agent selected from the group consisting of potassium perchlorate, ammonium perchlorate, perchlorates, copper oxide, basic copper nitrate, basic copper zinc nitrate, sodium nitrate, potassium nitrate and further nitrate salts, as well as combinations thereof, and
(C) 0 to 15 wt.%, preferably 0 to 5 wt.%, of further additives selected from the group consisting of iron oxide, magnesium oxide, amorphous silica, hydrophobic silica, calcium stearate, stearate salts, fatty acid salts and lubricating oil, as well as combinations thereof, each based on the total weight of the core,
wherein the proportions of the components (A) to (C) supplement each other to 100 percent.

11. The propellant element according to any one of the preceding claims, **characterized in that** the second pyrotechnical material (48) comprises the following components:
(A) 20 to 75 wt.%, preferably 45 to 65 wt.%, of at least one fuel selected from the group consisting of guanidinium nitrate, 1-nitroguanidine, tetrazoles and bi-tetrazoles, as well as combinations thereof;
(B) 25 to 60 wt.%, preferably 39 to 56 wt.%, of at least one oxidizing agent selected from the group consisting of ammonium perchlorate, potassium perchlorate, perchlorates, copper oxide, basic copper nitrate, basic copper zinc nitrate, sodium nitrate, potassium nitrate and further nitrate salts, as well as combinations thereof; and
(C) 0 to 15 wt.%, preferably 0 to 5 wt.%, of further additives selected from the group consisting of iron oxide, titanium oxide, aluminum oxide and calcium stearate, stearate salts and fatty acid salts, as well as combinations thereof, each based on the total weight of the receiving element and the closure element,
wherein the proportions of the components (A) to (C) supplement each other to 100 percent.

12. The propellant element according to any one of the preceding claims, **characterized in that** the first pyrotechnical material (46) has a grain size different from a second pyrotechnical material (48), the first pyrotechnical material (46) having an average grain size (D50) in a range from 1 to 30 µm and the second pyrotechnical material (48) having an average grain size (D50) in a range from 3 to 100 µm.

13. The propellant element according to any one of the preceding claims, **characterized in that** the coated pellet (24) is further provided, on at least one of its front faces, with an additional coating (32), the additional coating (32) preferably comprising a material promoting ignitability of the coated pellet (24).

14. A method of manufacturing a propellant element according to any one of the preceding claims, **characterized in that** the method comprises the following steps of:
a) providing an extrusion die;
b) filling the extrusion die with a second pyrotechnical material;
c) compressing the second pyrotechnical material while forming a coating lower side;
d) further filling the extrusion die with a first pyrotechnical material;
e) compressing the first pyrotechnical material while forming the core with an edge portion;
f) further filling the extrusion die with the second pyrotechnical material of step c);
g) completing compression while forming a coating upper side and while obtaining the propellant element.

15. Use of a propellant element according to any one of the preceding claims 1 to 13 in a safety device in a vehicle, specifically in a gas generator.

## Revendications

1. Propergol pour un générateur de gaz destiné à être utilisé dans un dispositif de sécurité sous la forme d'un comprimé enveloppe (24), pour lequel le comprimé enveloppe (24) comprend un noyau (20) constitué d'un premier matériau pyrotechnique (46) et une couche enveloppe (22) entourant le noyau (20) constituée d'un deuxième matériau pyrotechnique (48), pour lequel le premier matériau pyrotechnique (46) se distingue du deuxième matériau pyrotechnique (48), **caractérisé en ce que** le noyau (20) présente une partie périphérique (26) faisant saillie dans la direction radiale, qui s'étend à travers la couche enveloppe (22) jusqu'à un contour extérieur (28) du comprimé enveloppe (24), pour lequel la partie périphérique (26) est formée le long d'une direction circonférentielle du comprimé enveloppe (24) et présente une extension plus faible que le noyau (20) dans la direction axiale du comprimé enveloppe (24).

2. Propergol selon la revendication 1, **caractérisé en ce que** le noyau (20) présente avec la partie périphérique (26) une section transversale en forme de T.

3. Propergol selon la revendication 1, **caractérisé en ce que** le noyau (20) présente une section transversale en forme de coin avec la partie périphérique (26).

4. Propergol selon la revendication 1, **caractérisé en ce que** le noyau (20) est formé de manière convexe avec la partie périhérique (26), plus préférentiellement, **en ce que** le noyau (20) est formé de manière biconvexe avec la partie périphérique (26).

5. Propergol selon la revendication 1, **caractérisé en ce que** le noyau (20) a une forme biconvexe asymétrique avec la parie périphérique (26).

6. Propergol selon l'une quelconque des revendications précédentes, **caractérisé en ce que** la partie périphérique (26) est continue le long d'une direction périphérique du comprimé enveloppe (24).

7. Propergol selon l'une des revendications précédentes, **caractérisé en ce qu'**une extension axiale de la partie périphérique (26) est au plus égale à 80% d'une extension axiale du noyau (20), de préférence à 60%, de préférence à 40%, tout particulièrement à 10%.

8. Propergol selon l'une des revendications précédentes, **caractérisé en ce que** le premier matériau pyrotechnique (46) présente une vitesse de combustion supérieure à celle du deuxième matériau pyrotechnique (48).

9. Propergol selon l'une des revendications précédentes, **caractérisé en ce que** le premier matériau pyrotechnique (46) présente une vitesse de combustion comprise dans une plage de 20 à 60 mm/s à 20 MPa et le deuxième matériau pyrotechnique (48) présente une vitesse de combustion comprise dans une plage de 5 à 30 mm/s à 20 MPa.

10. Propergol selon l'une quelconque des revendications précédentes, **caractérisé en ce que** le premier matériau pyrotechnique (46) comprend les composants suivants :
(A) de 10 à 95 % en poids, de préférence 33 à 66 % en poids, d'au moins un combustible choisi dans le groupe constitué par le nitrate de guanidine, l'aluminium, l'acétate de polyvinyle, la nitrotriazolone, les tétrazoles, les bitétrazoles, la nitrocellulose et la 1-nitroguanidine, ainsi que leurs combinaisons ;
(B) de 55 à 90 % en poids, de préférence 25 à 85 % en poids, d'au moins un agent oxydant choisi dans le groupe constitué par le perchlorate de potassium, le perchlorate d'ammonium, les perchlorates, l'oxyde de cuivre, le nitrate basique de cuivre, le nitrate basique de cuivre et de zinc, le nitrate de sodium, le nitrate de potassium et d'autres sels de nitrate, ainsi que leurs combinaisons ; et
(C) de 0 à 15 % en poids, de préférence 0 à 5 % en poids, d'autres additifs choisis dans le groupe constitué par l'oxyde de fer, l'oxyde de magnésium, la silice amorphe, la silice hydrophobe, le stéarate de calcium, les sels de stéarate, les sels d'acides gras et l'huile lubrifiante, ainsi que leurs combinaisons, dans chaque cas sur la base du poids total du noyau,
pour lequel les proportions des composants (A) à (C) se complètent à 100 pour cent.

11. Propergol selon l'une quelconque des revendications précédentes, **caractérisé en ce que** le deuxième matériau pyrotechnique (48) comprend les composants suivants :
(A) de 20 à 75 % en poids, de préférence de 45 à 65 % en poids, d'au moins un combustible choisi dans le groupe constitué par le nitrate de guanidine, la 1-nitroguanidine, les tétrazoles et les bitétrazoles, et leurs combinaisons ;
(B) de 25 à 60 % en poids, de préférence de 39 à 56 % en poids, d'au moins un agent oxydant choisi dans le groupe constitué par le perchlorate d'ammonium, le perchlorate de potassium, les perchlorates, l'oxyde de cuivre, le nitrate basique de cuivre, le nitrate basique de cuivre et de zinc, le nitrate de sodium, le nitrate de potassium et d'autres sels de nitrate, et leurs combinaisons ; et
(C) de 0 à 15 % en poids, de préférence 0 à 5 % en poids, d'autres additifs choisis dans le groupe constitué par l'oxyde de fer, l'oxyde de titane, l'oxyde d'aluminium et le stéarate de calcium, les sels de stéarate et les sels d'acides gras, ainsi que leurs combinaisons, dans chaque cas par rapport au poids total de l'élément de départ et de l'élément final,
pour lequel les proportions des composants (A) à (C) se complètent à 100 pour cent.

12. Propergol selon l'une des revendications précédentes, **caractérisé en ce que** le premier matériau pyrotechnique (46) présente une granulométrie différente d'un deuxième matériau pyrotechnique (48), pour lequel le premier matériau pyrotechnique (46) présente une granulométrie moyenne (D50) comprise entre 1 et 30 µm et le deuxième matériau pyrotechnique (48) présente une granulométrie moyenne (D50) comprise entre 3 et 100 µm.

13. Propergol selon l'une quelconque des revendications précédentes, **caractérisé en ce que** le comprimé enveloppe (24) est en outre pourvu d'un revêtement supplémentaire (32) sur au moins l'une de ses faces d'extrémité, pour lequel le revêtement supplémentaire (32) comprend de préférence un matériau favorisant l'allumage du comprimé enveloppe (24).

14. Procédé de fabrication d'un propergol selon l'une quelconque des revendications précédentes, **caractérisé en ce que** le procédé comprend les étapes suivantes :
a) Mettre à disposition une matrice de pressage ;
b) Remplir la matrice de pressage avec un deuxième matériau pyrotechnique ;
c) Comprimer le deuxième matériau pyrotechnique en formant une face inférieure de la couche enveloppe ;
d) Remplir à nouveau la matrice de pressage avec un premier matériau pyrotechnique ;
e) Presser le premier matériau pyrotechnique en formant le noyau avec une partie périphérique ;
f) Remplir à nouveau la matrice de pressage avec le deuxième matériau pyrotechnique selon l'étape c);
g) Presser pour finition avec formation d'une face supérieure de couche enveloppe et avec obtention du propergol.

15. Utilisation d'un propergol selon l'une quelconque des revendications 1 à 13 précédentes dans un dispositif de sécurité d'un véhicule, notamment dans un générateur de gaz.
